# EUROPÄISCHE PATENTANMELDUNG

(11) **EP 3 689 518 A1**
(43) Veröffentlichungstag der Anmeldung: **05.08.2020**
(21) Anmeldenummer: 19204916.1
(22) Anmeldetag: 23.10.2019
(51) Int. Cl.: B23B 51/00, B23Q 11/00, B28D 1/14

(54) **SAUGBOHRWERKZEUG**

(30) Priorität: 30.01.2019 AT 500752019
(71) Anmelder: Alpen-Maykestag GmbH, 5412 Puch (AT)
(72) Erfinder: WENDLINGER, Karl, 5412 Puch (AT); AUER, Gerhard, 5412 Puch (AT)
(74) Vertreter: TBK

(57) **Zusammenfassung**

Ein erfindungsgemäßes Saugbohrwerkzeug hat eine Absaugvorrichtung, die einen sich entlang des Saugbohrwerkzeugs erstreckenden Kanal aufweist. Eine Absaugöffnung des Kanals ist in einem Bereich des Bohrkopfs vorgesehen. Außerdem ist an dem Bohrkopf eine Hartmetallplatte (1) vorgesehen. Die Hartmetallplatte ist in Form eines Prismas mit einer Grundfläche in Form eines Parallelogramms ausgebildet. Eine Hochachse (Z) der Hartmetallplatte liegt parallel zu einer Längsachse des Saugbohrwerkzeugs, und die Hartmetallplatte weist den Seiten des die Grundfläche ausbildenden Parallelogramms entsprechende kurze (3, 5) und lange (7, 9) Seitenflächen auf. Das der Grundfläche (11) des Prismas entlang der Hochachse (Z) des Prismas gegenüberliegende Ende ist mittels zwei schräg zu der Hochachse (Z) liegenden aufeinander zulaufenden Flächen (13, 15) ausgebildet. Diese bilden eine Schneidkante (17) aus. Endpunkte der Schneidkante (17) sind durch Facetten (19, 21) definiert, die an den langen Seitenflächen (7, 9) der Hartmetallplatte ausgebildet sind.

## Beschreibung

Die Erfindung betrifft ein Saugbohrwerkzeug gemäß Anspruch 1.

Aus dem Stand der Technik ist ein Bohrer mit Absaugvorrichtung beispielsweise aus der Druckschrift DE 298 16 665 U1 bekannt. Ein in dieser Druckschrift offenbartes Bohrwerkzeug hat eine Absaugvorrichtung mit einem Kanal, der sich entlang des Bohrers erstreckt. An der Bohrerspitze ist eine Saugdüse zum Absaugen von Bohrmehl und eine Hartmetall-Schneide ausgebildet.

Bohrwerkzeuge dieser Art werden bisher zum Schlagbohren eingesetzt. Dies bedeutet, dass das Bohrwerkzeug nicht nur gedreht wird, sondern auch einer axialen Hin- und Herbewegung ausgesetzt ist.

Bei schlagsensiblen Werkstoffen wie z.B. Hohlziegeln oder Gasbeton (z.B. unter dem Markennamen Ytong vertrieben) ist es allerdings nicht möglich, die bisher bekannten Saugbohrwerkzeuge einzusetzen, da deren Verwendung beim Schlagbohren zu unerwünschten Schädigungen des Werkstoffes führt, und ein Einsatz als Drehbohrer nicht zu zufriedenstellenden Ergebnissen führt. Insbesondere kommt es aufgrund der Werkstoffeigenschaften nicht zur Ausbildung eines homogenen feinen Bohrmehls, das einfach über einen Absaugkanal abgeführt werden kann. Es kann sogar regelmäßig vorkommen, dass sich regelmäßig verhältnismäßig große Bruchstücke des Werkstoffes in dem Bohrmehl finden. Diese können den Kanal verstopfen oder sogar eine mit dem Kanal verbundene Absaugvorrichtung beschädigen.

Es besteht daher Bedarf an einem Saugbohrwerkzeug, das bei einem Einsatz als Drehbohrer, insbesondere bei schlagsensiblen Werkstoffen, zufriedenstellende Ergebnisse liefert, ohne den Werkstoff zu schädigen.

Ein erfindungsgemäßes Saugbohrwerkzeug hat eine Absaugvorrichtung, die einen sich entlang des Saugbohrwerkzeugs erstreckenden Kanal aufweist. Eine Absaugöffnung des Kanals ist in einem Bereich des Bohrkopfs vorgesehen. Außerdem ist an dem Bohrkopf eine Hartmetallplatte vorgesehen. Die Hartmetallplatte ist in Form eines Prismas mit einer Grundfläche in Form eines Parallelogramms ausgebildet. Eine Hochachse der Hartmetallplatte liegt parallel zu einer Längsachse des Saugbohrwerkzeugs, und die Hartmetallplatte weist den Seiten des die Grundfläche ausbildenden Parallelogramms entsprechende kurze und lange Seitenflächen auf. Das der Grundfläche des Prismas entlang der Hochachse des Prismas gegenüberliegende Ende ist mittels zwei schräg zu der Hochachse liegenden aufeinander zulaufenden Flächen ausgebildet. Diese bilden eine Schneidkante aus. Endpunkte der Schneidkante sind durch Facetten definiert, die an den langen Seitenflächen der Hartmetallplatte ausgebildet sind.

Die Ausbildung der Hartmetallplatte wie voranstehend beschrieben, führt beim Drehbohren zur Ausbildung eines vergleichsweise feinen Bohrmehls, das einfach durch den Absaugkanal des Saugbohrwerkzeugs abgeführt werden kann. Dies ist insbesondere der Fall, wenn schlagsensible Werkstoffe wie z.B. Hohlziegel oder Gasbeton gebohrt werden.

Die Schneidkante kann bei Betrachtung entlang der Hochachse der Hartmetallplatte schräg zu allen Seiten des die Grundfläche ausbildenden Parallelogramms liegen.

Jede der Facetten kann im Wesentlichen eine Form eines Polygons, insbesondere eines Dreiecks, aufweisen. Eine Spitze des Polygons, insbesondere des Dreiecks, kann außerdem mit einem Endpunkt der Schneidkante zusammenfallen.

Die schräg zu der Hochachse liegenden Flächen können mit den kurzen Seitenflächen der Hartmetallplatte einen spitzen Winkel oder einen stumpfen Winkel ausbilden.

Die schräg zu der Hochachse liegenden Flächen können an der Schneidkante einen Winkel zwischen 117° und 123°, bevorzugt von 120° ausbilden.

Jede der schräg zu der Hochachse liegenden Flächen kann mit einer der langen Seitenflächen einen Winkel zwischen 68° und 74°, bevorzugt von 70° oder 72° ausbilden und mit der anderen der langen Seitenflächen einen Winkel zwischen 106° und 112°, bevorzugt 110° oder 108° ausbilden.

Die Facetten können miteinander einen Winkel zwischen 77° und 83°, bevorzugt von 80° ausbilden.

Die Innenwinkel des die Grundfläche ausbildenden Parallelogramms können 83° und 97° betragen.

Vorteilhaft kann außerdem jede der Facetten eine gekrümmte Fläche aufweisen, wodurch Umrisslinien der Facette in einer ungeraden Form ausgebildet sind.

Dabei kann die Schneidkante entlang der Hochachse betrachtet mit einer der Seitenflächen einen Winkel zwischen 122 und 128°, bevorzugt von 125° ausbilden.

Außerdem können Kanten zwischen den langen Seitenflächen und den kurzen Seitenflächen der Hartmetallplatte eine unterschiedliche Länge aufweisen, und ein Teil der längeren Kante eine Seite der Facette ausbilden.

Dabei kann die Länge der durch die längere Kante der kurzen Seitenfläche ausgebildeten einen Seite der Facette 25% der Länge der längeren Kante betragen.

Außerdem kann jede Facette eine konvexe form aufweisen, in der zwei Flächen aufeinander zulaufen, die mittels eines Radius ineinander übergehen.

Ein zwischen den zwei aufeinander zulaufenden Flächen ausgebildeter Winkel kann zwischen 3° und 6°, bevorzugt 3° betragen.

Das Saugbohrwerkzeug kann als Drehbohrer verwendet werden, insbesondere für schlagsensible Werkstoffe.

Die im Folgenden beschriebenen Figuren zeigen derzeit bevorzugte Ausführungsformen der Erfindung. Dabei zeigt:
Die Figur 1a eine Vorderansicht einer zum Einsatz in einem Saugbohrwerkzeug vorgesehenen Hartmetallplatte gemäß einer ersten Ausführungsform;
die Figur 1b eine Seitenansicht der Hartmetallplatte aus der Figur 1a;
die Figur 1c eine Schnittansicht des in der Figur 1a mit B-B gekennzeichneten Bereichs;
die Figur 1d eine Draufsicht der Hartmetallplatte aus der Figur 1a;
die Figur 2a eine Vorderansicht einer zum Einsatz in einem Saugbohrwerkzeug vorgesehenen Hartmetallplatte gemäß einer zweiten Ausführungsform;
die Figur 2b eine Schnittansicht des in der Figur 2a mit A-A gekennzeichneten Bereichs; und
die Figur 2c eine Seitenansicht der Hartmetallplatte aus der Figur 2a.

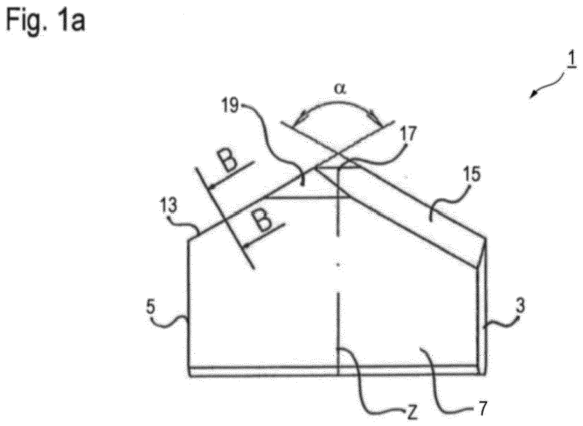

Eine erfindungsgemäße Hartmetallplatte 1 gemäß einer ersten Ausführungsform ist aus den Figuren 1a bis 1d ersichtlich.

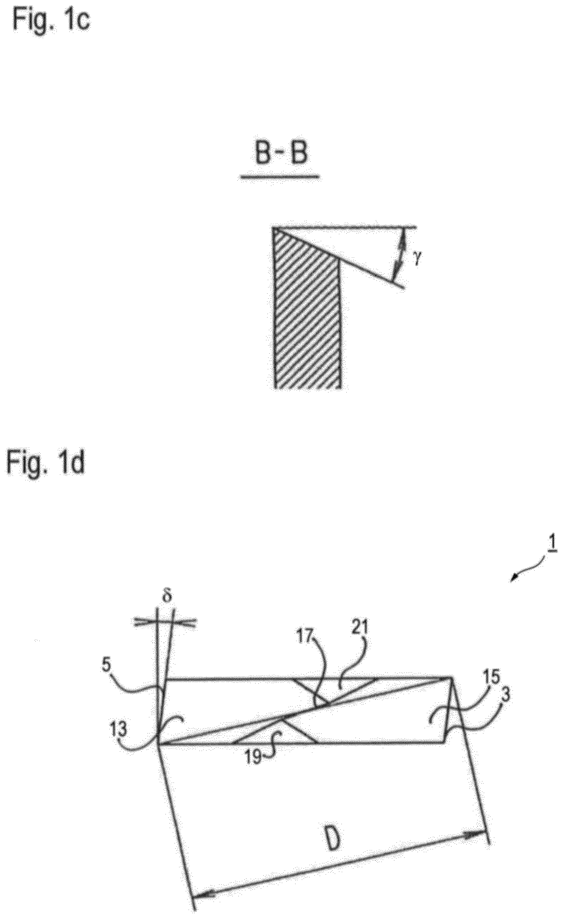

Die Hartmetallplatte 1 ist z.B. aus einem gesinterten Metall hergestellt. Sie besteht aus einem Prisma mit einer Grundfläche eines Parallelogramms (diese entspricht einer Grundfläche der Hartmetalplatte), dessen Innenwinkel bevorzugt 83° und 97° betragen. Der aus der Figur 1d ersichtliche Winkel δ beträgt nämlich 7°. Die Grundfläche des Parallelogramms wird in dieser Beschreibung auch als "Grundfläche 11 der Hartmetalplatte" bezeichnet. Eine längere Diagonale des Parallelogramms weist eine Länge D auf. Gemäß einer bevorzugten Ausgestaltung entspricht diese Länge D dabei auch einem Durchmesser des Saugbohrwerkzeugs. D liegt dabei bevorzugt in einem Bereich zwischen 3 mm und 16 mm.

Das Parallelogramm weist außerdem eine vorbestimmte Dicke S auf, sodass zwei Seiten des Parallelogramms kürzer ausgebildet sind als die beiden anderen Seiten.

Außerdem weist die Hartmetallplatte 1 den Seiten des Parallelogramms entsprechende kurze Seitenflächen 3, 5 sowie lange Seitenflächen 7, 9 auf. Die Ausdrücke "kurz" und "lang" beziehen sich dabei auf die mit der Grundfläche 11 gemeinsame Kante. Im Folgenden werden diese langen Seitenflächen 7, 9 und diese kurzen Seitenflächen 3, 5 der Einfachheit halber auch als "lange Seiten 7, 9" und als "kurze Seiten 3, 5" bezeichnet.

Gegenüber der Grundfläche 11 der Hartmetallplatte 1, ist eine Spitze mit einer Schneidkante 17 ausgebildet. Die Schneidkante 17 wird durch zwei entlang der Schneidkante 17 zusammenstoßende schräge Flächen 13, 15 gebildet. Die schrägen Flächen bilden dabei einen Winkel α von 120° aus.

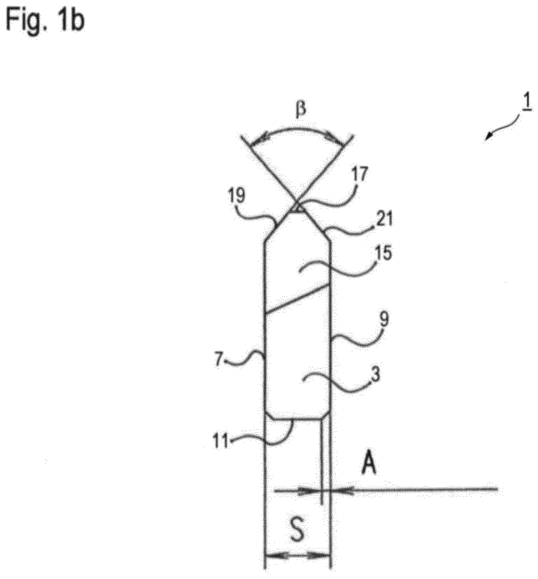

Die schrägen Flächen 13, 15 liegen außerdem in einem schrägen Winkel zu der Hochachse Z der Hartmetallplatte. Der Winkel beträgt dabei die Hälfte des Winkels α. Außerdem sind die schrägen Flächen 13, 15 zu den langen Seiten 7, 9 so geneigt, dass sie in einer Ansicht von der Seite wie z.B. in der Figur 1b mit den langen Seiten 7, 9, einen stumpfen Winkel von 110° bzw. einen spitzen Winkel von 70° ausbilden, wie aus der Figur 1c ersichtlich ist. Der in der Figur 1c dargestellt Winkel γ beträgt nämlich 20°.

Auf den langen Seiten 7, 9 der Hartmetallplatte 1 sind außerdem noch Facetten 19, 21 ausgebildet. Diese weisen von vorne betrachtet die Form eines Dreiecks auf, wie aus der Figur 1a ersichtlich ist. Die Spitze des Dreiecks fällt mit dem jeweiligen Endpunkt der Schneidkante 17 zusammen. Dies ist insbesondere aus den Figuren 1a und 1d ersichtlich. In einer Seitenansicht bilden die beiden Facetten 19, 21 einen Winkel β von 80° aus, wie aus der Figur 1b ersichtlich ist.

Die Längskanten zwischen der Grundfläche 11 und den langen Seiten 7 bzw. 9 sind mittels Fasen A gebrochen.

Die Hartmetallplatte 1 ist so am Kopf eines Saugbohrers befestigt, dass die Hochachse Z mit einer Drehachse des Saugbohrers zusammenfällt. Die Drehung erfolgt dabei derart, dass die längere der beiden seitlichen Kanten der langen Seiten 7, 9 in den Werkstoff schneidet, während die kürzere der beiden seitlichen Kanten nachläuft. Das heißt, bei Betrachtung der Figur 1 dreht ist die längere der beiden seitlichen Kanten die durch die Seitenfläche 3 und die lange Seite 9 gebildete Kante. Diese Kante dreht in der Figur gesehen nach rechts.

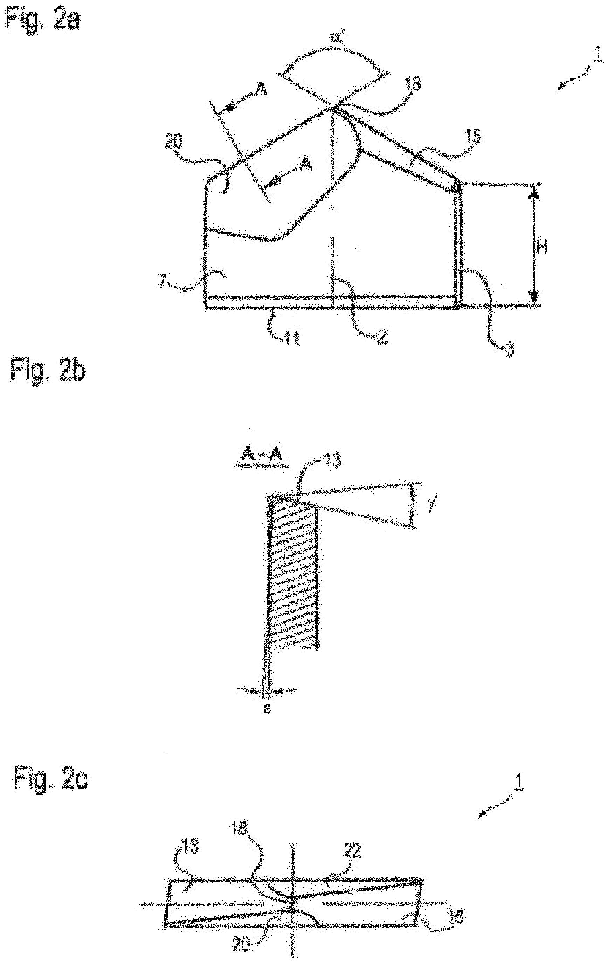

Eine zweite Ausführungsform der Erfindung ist aus den Figuren 2a bis 2c ersichtlich. In diesen Figuren sind Elementen die zu denen der ersten Ausführungsform gleich sind, die gleichen Bezugszeichen wie in der ersten Ausführungsform zugewiesen, sodass hinsichtlich dieser Elemente auf die Ausführungen zur ersten Ausführungsform Bezug genommen werden kann. Auf eine Wiederholung der Beschreibung dieser Elemente wird verzichtet. Ähnliche Winkel, die sich in ihren Abmessungen nicht von denen der ersten Ausführungsform unterscheiden, wie z.B. der Winkel α' werden ebenfalls nicht mehr gesondert beschrieben.

Ein wesentlicher Unterschied zwischen der ersten Ausführungsform und der zweiten Ausführungsform besteht in der Ausbildung der Facetten. Während die Facetten 19, 21 der ersten Ausführungsform aus einer Ebene bestehen, bestehen die Facetten 20, 22 der zweiten Ausführungsform aus einer gekrümmten Fläche. Diese wird durch zwei mit in einem Winkel ε von 3° zueinanderstehenden Facettenflächen gebildet, wie aus der Figur 2b ersichtlich ist. Zur Vermeidung einer Kante ist in dem Bereich, wo die beiden Facettenflächen zusammenlaufen, ein Radius ausgebildet. Dadurch wird die Bildung einer Kante vermieden.

Somit sind die Facetten 20, 22 der zweiten Ausführungsform mit einer geringen Konvexität versehen.

Die Herstellung der Facetten erfolgt mittels eines Werkzeugs das einen runden Querschnitt aufweist. Dadurch kommt es zu der Ausbildung von nicht linearen Begrenzungslinien, wie insbesondere aus den Figuren 2a und 2c ersichtlich ist.

Außerdem erstreckt sich jede Facette 20, 22 bis zu der jeweiligen Seitenfläche 3, 5. Dabei beträgt eine Länge einer Kante, die durch die Facette und die jeweilige Seitenfläche 3, 5 ausgebildet ist, 25% der Gesamtlänge H der längeren Kante zwischen den Seitenflächen 3, 5 und den langen Seiten 7, 9. Dies ist in der Figur 1 dargestellt.

Weitere Unterschiede zwischen der ersten Ausführungsform und der zweiten Ausführungsform betreffen die Winkel zwischen den schrägen Flächen 13, 15 und den langen Seiten. Der aus der Figur 2b ersichtliche Winkel γ' beträgt nämlich lediglich 18°. Somit betragen die Winkel zwischen den schrägen Flächen 13, 15 ca. 72° und 108°. Im Fall des spitzen Winkels von 72° ist hier aber zu berücksichtigen, dass die Facette in diesem Bereich durch die mit dem Winkel ε auf die zweite Facettenfläche zulaufende Facettenfläche gebildet ist. Daher entspricht die Angabe von 72° einem Winkel, der gebildet wird, wenn der Winkel ε 0° beträgt.

## Patentansprüche

1. Saugbohrwerkzeug, mit:
einer Absaugvorrichtung, die einen sich entlang des Saugbohrwerkzeugs erstreckenden Kanal aufweist, wobei
eine Absaugöffnung des Kanals in einem Bereich des Bohrkopfs vorgesehen ist, und
an dem Bohrkopf eine Hartmetallplatte (1) vorgesehen ist, wobei
die Hartmetallplatte in Form eines Prismas mit einer Grundfläche in Form eines Parallelogramms ausgebildet ist, eine Hochachse (Z) der Hartmetallplatte parallel zu einer Längsachse des Saugbohrwerkzeugs liegt, und die Hartmetallplatte den Seiten des die Grundfläche ausbildenden Parallelogramms entsprechende kurze (3, 5) und lange (7, 9) Seitenflächen aufweist,
das der Grundfläche (11) des Prismas entlang der Hochachse (Z) des Prismas gegenüberliegende Ende mittels zwei schräg zu der Hochachse (Z) liegenden aufeinander zulaufenden Flächen (13, 15) ausgebildet ist, die eine Schneidkante (17, 18) ausbilden, und
Endpunkte der Schneidkante (17; 18) durch Facetten definiert sind, die an den langen Seitenflächen (7, 9) der Hartmetallplatte ausgebildet sind.

2. Saugbohrwerkzeug nach Anspruch 1, wobei
die Schneidkante (17; 18) bei Betrachtung entlang der Hochachse (Z) der Hartmetallplatte schräg zu allen Seiten des die Grundfläche ausbildenden Parallelogramms liegt.

3. Saugbohrwerkzeug nach Anspruch 2, wobei
jede der Facetten im Wesentlichen eine Form eines Polygons, insbesondere eines Dreiecks, aufweist, und
eine Spitze des Polygons, insbesondere des Dreiecks, mit einem Endpunkt der Schneidkante (17; 18) zusammenfällt.

4. Saugbohrwerkzeug nach einem der vorangehenden Ansprüche, wobei
die schräg zu der Hochachse (Z) liegenden Flächen (13, 15) mit den kurzen Seitenflächen (3, 5) der Hartmetallplatte einen spitzen Winkel oder einen stumpfen Winkel ausbilden.

5. Saugbohrwerkzeug nach einem der vorangehenden Ansprüche, wobei
die schräg zu der Hochachse (Z) liegenden Flächen (13, 15) an der Schneidkante (17; 18) einen Winkel zwischen 117° und 123°, bevorzugt von 120° ausbilden.

6. Saugbohrwerkzeug nach einem der vorangehenden Ansprüche, wobei
jede der schräg zu der Hochachse (Z) liegenden Flächen (13, 15) mit einer der langen Seitenflächen (7, 9) einen Winkel zwischen 68° und 74°, bevorzugt von 70° oder 72° ausbildet, und mit der anderen der langen Seitenflächen (9, 7) einen Winkel zwischen 106° und 112°, bevorzugt 110° oder 108° ausbildet.

7. Saugbohrwerkzeug nach einem der vorangehenden Ansprüche, wobei
die Facetten (19, 21) miteinander einen Winkel zwischen 77° und 83°, bevorzugt von 80° ausbilden.

8. Saugbohrwerkzeug nach einem der vorangehenden Ansprüche, wobei
die Innenwinkel des die Grundfläche ausbildenden Parallelogramms 83° und 97° betragen.

9. Saugbohrwerkzeug nach einem der vorangehenden Ansprüche, wobei
jede der Facetten (20, 22) eine gekrümmte Fläche aufweist, wodurch Umrisslinien der Facette (20, 22) in einer ungeraden Form ausgebildet sind.

10. Saugbohrwerkzeug nach Anspruch 9, wobei
die Schneidkante (18) entlang der Hochachse (Z) betrachtet mit einer der Seitenflächen einen Winkel zwischen 122 und 128°, bevorzugt von 125° ausbildet.

11. Saugbohrwerkzeug nach einem der Ansprüche 9 bis 10, wobei
Kanten zwischen den langen Seitenflächen (7, 9) und den kurzen Seitenflächen (3, 5) der Hartmetallplatte eine unterschiedliche Länge aufweisen, und ein Teil der längeren Kante eine Seite der Facette (20, 22) ausbildet.

12. Saugbohrwerkzeug nach Anspruch 11, wobei die Länge der durch die längere Kante der kurzen Seitenfläche ausgebildeten einen Seite der Facette (20, 22) 25% der Länge (H) der längeren Kante beträgt.

13. Saugbohrwerkzeug nach einem der Ansprüche 9 bis 12, wobei
jede Facette (20, 22) eine konvexe Form aufweist, in der zwei Flächen aufeinander zulaufen, die mittels eines Radius ineinander übergehen.

14. Saugbohrwerkzeug nach Anspruch 13, wobei
ein zwischen den zwei aufeinander zulaufenden Flächen ausgebildeter Winkel zwischen 3° und 6°, bevorzugt 3° beträgt.

15. Verwendung eines Saugbohrwerkzeugs nach einem der Ansprüche 1 bis 14 als Drehbohrer.
